# EUROPÄISCHE PATENTSCHRIFT

(11) **EP 0 945 632 B1**
(45) Veröffentlichungstag und Bekanntmachung des Hinweises auf die Patenterteilung: **21.07.2004**
(21) Anmeldenummer: 99105414.9
(22) Anmeldetag: 17.03.1999
(51) Int. Cl.: F16C 7/02

(54) **Pleuel für eine Hubkolbenmaschine**
Connecting rod for a reciprocating piston engine
Bielle pour un moteur à pistons alternatifs

(30) Priorität: 21.03.1998 DE 19812532
(43) Veröffentlichungstag der Anmeldung: 29.09.1999
(73) Patentinhaber: AUDI AG, 85045 Ingolstadt (DE)
(72) Erfinder: Will, Hans Dieter, 85057 Ingolstadt (DE); Huber, Karl Dr., 85072 Eichstätt (DE)

(56) Entgegenhaltungen:
- DE-C- 808 008
- US-A- 3 421 201
- PATENT ABSTRACTS OF JAPAN vol. 1997, no. 09, 30. September 1997 (1997-09-30) & JP 09 126220 A (HITACHI METALS LTD), 13. Mai 1997 (1997-05-13)
- PATENT ABSTRACTS OF JAPAN vol. 017, no. 633 (M-1513), 24. November 1993 (1993-11-24) & JP 05 196030 A (MITSUBISHI MATERIALS CORP), 6. August 1993 (1993-08-06)

## Beschreibung

Die Erfindung betrifft ein Pleuel für eine Hubkolbenmaschine, insbesondere eine Brennkraftmaschine, gemäß dem Oberbegriff des Patentanspruches 1.

Ein derartiges Pleuel beschreibt die JP 05196030 A1. Dabei sind das kleine Pleuelauge, der Schaft und die an den Schaft anschließende Hälfte des geteilten großen Pleuelauges aus Titan und die andere Augenhälfte bzw. der Deckel mit den Befestigungsschrauben aus Stahl hergestellt. Der Vorteil eines derartigen Pleuels liegt in der Minimierung des oszillierenden Massenanteils des Pleuels im Betrieb, jedoch ist das Kosten/Nutzen-Verhältnis noch nicht optimal.

Aufgabe der Erfindung ist es, ein Pleuel der gattungsgemäßen Art vorzuschlagen, welches einen noch besseren Kompromiß in der Werkstoffanwendung und im Kosten/Nutzen-Verhältnis bietet.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Bei dem erfindungsgemäßen Pleuel sind das kleine Pleuelauge und im wesentlichen der Schaft aus dem leichteren Metall bzw. bevorzugt Titan oder einer Titanlegierung, und das gesamte große Pleuelauge aus dem schwereren Metall, bevorzugt Stahl oder einer Stahllegierung, hergestellt und fest miteinander verbunden. Durch diese Anordnung ist im wesentlichen der rotierende Massenanteil des Pleuels durch das kostengünstigere, schwerere Metall gebildet, welches wie bekannt durch entsprechende Gegengewichte an der Kurbelwelle gut ausgleichbar bzw. beherrschbar ist. Der überwiegend oszillierende Massenanteil, gebildet durch den Schaft und das kleine Pleuelauge, ist aus dem leichteren Metall bzw. dem Titan gebildet und dementsprechend gewichtsmäßig so minimiert, daß gegebenenfalls komplizierte Ausgleichsmaßnahmen wie z. B. ein modifizierter Lancasterausgleich entfallen können. Vorteilhaft ist dabei auch, daß der Massenschwerpunkt (Trägheitsmoment) des Pleuels nach unten dem großen Pleuelauge zu verschoben wird, wodurch die Massenquerkräfte im Bereich des kleinen Pleuelauges deutlich reduziert sind.

Durch den erfindungsgemäßen Vorschlag ist der Einsatz des relativ kostenintensiven leichteren Metalls auf den unbedingt notwendigen Anteil beschränkt, der hinsichtlich des Massenausgleiches am aufwendigsten beherrschbar ist bzw. die meisten Vorteile bringt.

Dadurch gelingt es, das Kosten/Nutzen-Verhältnis so zu gestalten, daß sich selbst eine Massenfertigung eines derartigen Pleuels zum Beispiel für eine Hubkolben-Brennkraftmaschine anbietet.

Die feste Verbindung zwischen dem großen Pleuelauge und ggf. einem Schaftansatz mit dem übrigen Schaft und dem kleinen Pleuelauge kann ggf. mittels einer Schraubverbindung, bevorzugt jedoch stoffschlüssig bzw. durch Löten oder Schweißen erfolgen. Für eine Großserienfertigung wird bevorzugt eine Reibschweißung vorgeschlagen.

Ein Ausführungsbeispiel der Erfindung ist im folgenden mit weiteren Einzelheiten näher erläutert. Die schematische Zeichnung zeigt in
- Fig. 1: eine Vorderansicht eines Pleuels für eine Hubkolben-Brennkraftmaschine mit einem Abschnitt aus leichterem Metall und einem Abschnitt aus schwererem Metall, die durch Reibschweißen miteinander verbunden sind; und
- Fig. 2: einen Schnitt entlang der Linie II-II der Fig. 1 durch das Pleuel.

Das mit 10 bezeichnete Pleuel setzt sich aus einem oberen Abschnitt 12 leichteren Metalls bzw. aus Titan oder einer Titanlegierung und einem unteren Abschnitt 14 aus Stahl oder einer Stahllegierung zusammen. Die beiden Abschnitte 12, 14 sind an der Fügestelle (Linie 16) durch eine Reibschweißung 18 fest und stoffschlüssig miteinander verbunden.

Der obere Abschnitt 12 aus Titan setzt sich aus dem kleinen Pleuelauge 20 und dem Schaft 22 zusammen und bildet den überwiegenden oszillierenden Massenanteil des Pleuels 10 im Betrieb, der aufgrund des günstigen spezifischen Gewichtes des verwendeten Werkstoffes minimiert ist.

Der untere Abschnitt 14 des Pleuels 10 besteht aus dem großen, geteilten Pleuelauge 24 und einem daran angeformten Schaftansatz 26, die aus Stahl gefertigt sind. Die obere Hälfte 24a des großen Pleuelauges 24 ist mit dem brückenartigen Deckel 24b geschlossen, wobei der Deckel in herkömmlicher Weise mittels zweier Befestigungsschrauben 28 befestigt ist.

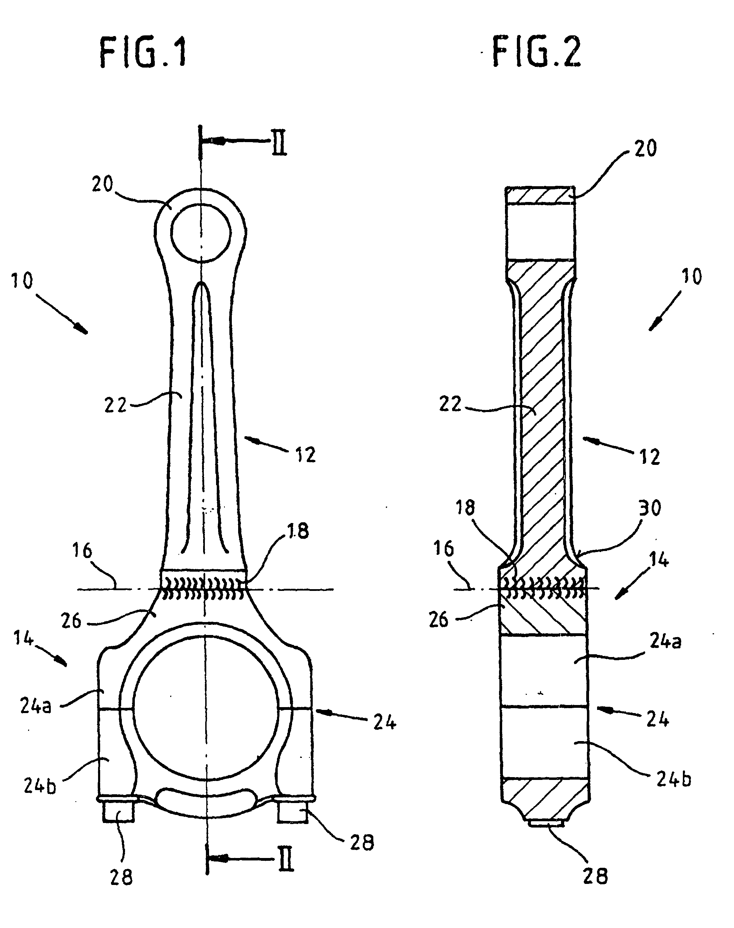

Der Schaftansatz 26 und der Schaft 22 sind im Fügebereich 16 zunächst zylindrisch ausgebildet (vergl. Fig. 1).

Zum Herstellen der Reibschweißung werden der Fügebereich des Schaftes 22 ebenfalls mittels Reibschweißung mit einer Übergangsschicht aus Vanadin und der Fügebereich des Schaftansatzes 26 mit einer Übergangsschicht aus Kupfer versehen und anschließend unter Drehung z.B. des Abschnittes 12 und starkem Anpressdruck (es wird z.B. verwiesen auf die EP 0513646 B1 - Reibschweißen von Konstruktionsteilen aus Stahl mit solchen aus Aluminium oder Titan oder deren Legierung) reibverschweißt.

Anschließend wird der Fügebereich des Schaftes 22, 26 so bearbeitet bzw. abgeflacht, daß sich eine Seitenkontur des Schaftes 22 mit dem sanften, gerundeten Übergang 30 vom Schaft 22 in den Schaftansatz 26 ergibt.

Die Erfindung ist nicht auf das gezeigte Ausführungsbeispiel beschränkt. Anstelle des Reibschweißens kann auch ein Elektronenstrahl - oder ein Laserstrahlschweißen eingesetzt werden. Ebenfalls denkbar ist eine stoffschlüssige Verbindung der beiden Abschnitte 12, 14 unter Einsatz z.B. eines Hartlotes.

Anstelle des Abschnittes 12 aus Titan oder einer Titanlegierung könnte auch eine hochfeste Aluminiumlegierung, z.B. AN eingesetzt werden. Anstelle eines Stahles oder einer Stahllegierung beim Abschnitt 14 könnte auch hochlegierter Grauguß oder Stahlguß verwendet sein.

## Patentansprüche

1. Pleuel (10) für eine Hubkolbenmaschine, insbesondere Brennkraftmaschine, mit einem kleinen Pleuelauge (20), einem Schaft (22) und einem großen Pleuelauge (24) und hergestellt aus einem Abschnitt schwereren Metalls und einem Abschnitt leichteren Metalls, wobei das kleine Pleuelauge (20) und im wesentlichen der Schaft (22) aus dem lelchteren Metall hergestellt ist **dadurch gekennzeichnet, daß** das gesamte große Pleuelauge (24) aus dem schwereren Metall hergestellt ist, wobei die Abschnitte fest miteinander verbunden sind.

2. Pleuel nach Anspruch 1, **dadurch gekennzeichnet, daß** der Abschnitt (14) des großen Pleuelauges (24) mit einem Schaftansatz (26) zur Verbindung mit dem Schaft (22) des anderen Absatzes versehen ist.

3. Pleuel nach den Ansprüchen 1 und 2, **dadurch gekennzeichnet, daß** der Abschnitt (12) leichteren Metalls mit dem kleinen Pleuelauge und dem Schaft den überwiegend oszillierenden Massenanteil des Pleuels und der Abschnitt (14) mit dem großen Pleuelauge (24) den überwiegend rotierenden Massenanteil des Pleuels (10) bildet.

4. Pleuel nach den Ansprüchen 1 - 3, **dadurch gekennzeichnet, daß** die beiden Abschnitte (12, 14) des Pleuels (10) stoffschlüssig miteinander verbunden sind.

5. Pleuel nach Anspruch 4, **dadurch gekennzeichnet, daß** die beiden Abschnitte (12,14) miteinander verschweißt sind.

6. Pleuel nach Anspruch 5, **dadurch gekennzeichnet, daß** die beiden Abschnitte (12,14) miteinander reibverschweißt sind.

7. Pleuel nach Anspruch 6, **dadurch gekennzeichnet, daß** die beiden Abschnitte (12,14) im Fügebereich (16) rotationssymmetrisch ausgebildet und nach dem Reibschweißen entsprechend der Schaftform abgeflacht sind.

8. Pleuel nach einem oder mehreren der Ansprüche 1 - 7, **dadurch gekennzeichnet, daß** der aus schwererem Metall hergestellte Abschnitt (14) aus Stahl oder einer Stahllegierung besteht.

9. Pleuel nach einem oder mehreren der Ansprüche 1 - 8, **dadurch gekennzeichnet, daß** der aus leichterem Metall hergestellte Abschnitt (12) aus Titan oder einer Titanlegierung besteht.

## Claims

1. Connecting rod (10) for a reciprocating piston engine, in particular an internal combustion engine, having a small-end bearing (20), a shaft (22) and a big-end bearing (24) and made from a section of heavier metal and a section of lighter metal, whereby the small-end bearing (20) and substantially the shaft (22) are made from the lighter metal, **characterised in that** the entire big-end bearing (24) is made from the heavier metal, whereby the sections are firmly attached to each other.

2. Connecting rod according to Claim 1, **characterised in that** the section (14) of the big-end bearing (24) is provided with a shaft attachment (26) for connecting to the shaft (22) of the other section.

3. Connecting rod according to Claims 1 and 2, **characterised in that** the section (12) of lighter metal with the small-end bearing and the shaft comprises the overwhelming oscillating mass portion of the connecting rod and the section (14) with the big-end bearing (24) comprises the overwhelmingly rotating mass portion of the connecting rod (10).

4. Connecting rod according to the claims 1 to 3, **characterised in that** the two sections (12, 14) of the connecting rod (10) are attached to each other by mingling of materials.

5. Connecting rod according to Claim 4, **characterised in that** the two sections (12, 14) are welded to each other.

6. Connecting rod according to Claim 5, **characterised in that** the two sections (12, 14) are friction welded to each other.

7. Connecting rod according to Claim 6, **characterised in that** the two sections (12, 14) are designed with rotational symmetry in the joint region (16) and, after friction welding, are flattened according to the shaft shape.

8. Connecting rod according to one or more of the claims 1 to 7, **characterised in that** the section (14) made of heavier metal comprises steel or a steel alloy.

9. Connecting rod according to one or more of the claims 1 to 8, **characterised in that** the section (12) made of lighter metal comprises titanium or a titanium alloy.

## Revendications

1. Bielle (10) pour un moteur à pistons alternatifs, en particulier un moteur à combustion interne, avec un oeillet de bielle (20) de petite taille, une tige (22) et un oeillet de bielle (24) de grande taille, et fabriquée en un tronçon de métal plus lourd et un tronçon de métal plus léger, le petit oeillet de bielle (20) et pratiquement la tige (22) étant fabriqués du métal plus léger et plus lourd, **caractérisée en ce que** l'ensemble du' grand oeillet de bielle (24) est fabriqué à partir du métal plus lourd, les tronçons étant reliés ensemble rigidement.

2. Bielle selon la revendication 1, **caractérisée en ce que** le tronçon (14) du grand oeillet de bielle (24) est muni d'un appendice de tige (26) pour assurer la liaison à la tige (22) de l'autre tronçon.

3. Bielle selon l'une des revendications 1 et 2, **caractérisée en ce que** le tronçon (12) en métal plus léger, comprenant le petit oeillet de bielle et la tige, forme la partie de masse majoritairement oscillante de la bielle, et le tronçon (14) avec le grand oeillet de bielle (24) forme la partie de masse majoritairement tournante de la bielle (10).

4. Bielle selon les revendications 1 à 3, **caractérisée en ce que** les deux tronçons (12, 14) de la bielle (10) sont reliés ensemble par une liaison par la matière.

5. Bielle selon la revendication 4, **caractérisée en ce que** les deux tronçons (12, 14) sont soudés ensemble.

6. Bielle selon la revendication 5, **caractérisée en ce que** les deux tronçons (12, 14) sont soudés ensemble par friction.

7. Bielle selon la revendication 6, **caractérisée en ce que** les deux tronçons (12, 14), dans la zone de joint (16), sont conformés suivant une symétrie de rotation et aplatis de manière correspondant à la forme de tige, après avoir procédé au soudage par friction.

8. Bielle selon l'une ou plusieurs des revendications 1 à 7, **caractérisée en ce que** le tronçon (14) fabriqué en métal plus lourd est formé d'acier, ou d'un alliage d'acier.

9. Bielle selon l'une ou plusieurs des revendications 1 à 8, **caractérisée en ce que** le tronçon (12) fabriqué en métal plus léger est formé de titane, ou d'un alliage de titane.
